# EUROPEAN PATENT SPECIFICATION

(11) **EP 2 569 254 B1**
(45) Date of publication and mention of the grant of the patent: **18.03.2015**
(21) Application number: 11727336.7
(22) Date of filing: 12.05.2011
(51) Int. Cl.: C02F 1/461, C02F 1/00, C02F 1/42, C02F 1/467

(54) **DEVICE FOR PRODUCING AN ELECTROCHEMICALLY ACTIVATED SOLUTION BY MEANS OF AN ELECTROLYSIS PROCESS**
VORRICHTUNG ZUR HERSTELLUNG EINER ELEKTROCHEMISCH AKTIVIERTEN LÖSUNG MITTELS EINES ELEKTROLYSE-PROZESSES
DISPOSITIF DE PRODUCTION D'UNE SOLUTION ELECTROCHIMIQUEMENT ACTIVÉ PAR UN PROCÉDÉ D'ÉLECTROLYSE

(30) Priority: 14.05.2010 NL 2004720
(43) Date of publication of application: 20.03.2013
(73) Proprietor: Watter Holding B.V., 7751 AK Dalen (NL)
(72) Inventor: REINDERS, Rico, NL-7642 GT Wierden (NL); KOOP, Willem, Alfred, NL-7751 AK Dalen (NL); KOOP, Herman, Johan, NL-7751 AK Dalen (NL)
(74) Representative: Mink-Lindenburg, Charlotte Hildegard
(86) International application number: PCT/NL2011/050323
(87) International publication number: WO 2011/142671

(56) References cited:
- EP-A1- 0 612 694
- WO-A2-2007/093395
- US-A- 5 858 201
- US-A1- 2005 029 093

## Description

The present invention relates to a device for producing an electrochemically activated solution, such as an anolyte or a catholyte solution, by means of an electrolysis process, for instance EOW, on the basis of one or more raw materials, for instance water and salt.

Such a device is known in the relevant field. In the known device the electrolysis process is based on Electrical Chemical Activation (ECA) technology, whereby an anolyte solution known as Electrolyzed Oxidized Water (EOW) is produced on location.

The know device is marketed by applicant. The anolyte solution has a wide range of applications. It is possible to envisage disinfection of food, medical instruments, spaces, surfaces and water sources. The EOW can be used in all phases (as ice, liquid or gas).

The invention has for its object to provide an improved device of the type stated in the preamble with a greatly reduced start-up time, i.e. a greatly reduced time between switch-on of the device and the production of a usable electrochemically activated solution.

The device according to the invention comprises for this purpose an electrochemical reactor for performing the electrolysis process, measuring means for measuring various parameter values of the electrolysis process and/or the solution, and a first and second control unit which are connectable to the measuring means, wherein the device further comprises a separate housing in which the electrochemical reactor, the second control unit and the measuring means are received, which separate housing is adapted for connection to the first control unit and to reservoirs present in the device for the raw materials and/or the solution. The device according to the invention is distinguished by the separate housing, in which both the electrochemical reactor and the measuring means are received. Operation with short control loops is hereby possible.

A device according to the preamble of claim 1 is disclosed in US 2005/029093.

According to the invention the device is characterized in that for the purpose of adjusting the electrolysis process on the basis of the parameter values until the parameter values meet predetermined target values, after which the solution is approved, the second control unit compares the measured pH value to a predetermined target value and, in the case of a sufficient degree of similarity, dispenses the solution at an outlet for approved disinfectant or, in the case a pH value is too low or too high, discharges the solution as waste at another outlet for rejected disinfectant. The pH value is an important instrument for safeguarding the quality of the electrolysis process.

The electrolysis process can be continuously monitored on the basis of the measured parameter values and can be adjusted quickly by the control unit if necessary. This results in a stable electrolysis process and in the production of a stable solution of the highest quality.

According to a practical preferred embodiment, the housing is arranged releasably in the device. The releasable housing can be taken out for the purpose of maintenance, repair or replacement, so that the device is quickly operational again.

According to a further development of this preferred embodiment, an adjustable quantity of a catholyte solution from the electrochemical reactor is fed back into the electrochemical reactor, and the magnitude of the quantity depends on the measured pH value. Feedback of at least part of the catholyte solution to the electrochemical reactor is an efficient method of controlling the pH value.

According to yet another preferred embodiment, the measuring means are adapted to measure the ORP value of the produced solution before dispensing, and the second control unit compares the measured ORP value to a predetermined target value and, in the case of an equal or higher value, dispenses the solution or, in the case of an ORP value which is too low, discharges the solution as waste. The Oxidation Redox Potential (ORP) is associated with the pH value and functions as second instrument (back-up) in safeguarding the quality of the electrolysis process.

According to yet another, particularly safe preferred embodiment, the measuring means are adapted to measure a first temperature value of at least one of the raw materials, for instance water, and a second temperature value of the solution, for instance EOW, wherein the control unit determines the temperature difference and, in the case of an unacceptable temperature increase, stops production.

In a subsequent preferred embodiment the measuring means are adapted to measure the EC value for the electrical conductivity of the solution and of the inflow water, wherein the control unit compares the measured EC values to predetermined target values and, in the case of an unacceptable positive difference, begins a process for regenerating a reservoir with water softener which is connected to the housing. This automatic regeneration process guarantees proper operation of the device according to the invention, and thereby the quality of the solution.

The electrochemical reactor is preferably a Flow Electrolyte Module (FEM) cell.

The electrolysis process is preferably based on Electrical Chemical Activation (ECA) technology.

The invention will be further elucidated with reference to the following figures:
Figure 1 shows a diagram of a device according to the invention;
Figures 2A and 2B show a first preferred embodiment of an electrochemical reactor according to the invention in more detail; and
Figure 3 shows a part of the diagram of figure 1 in more detail.

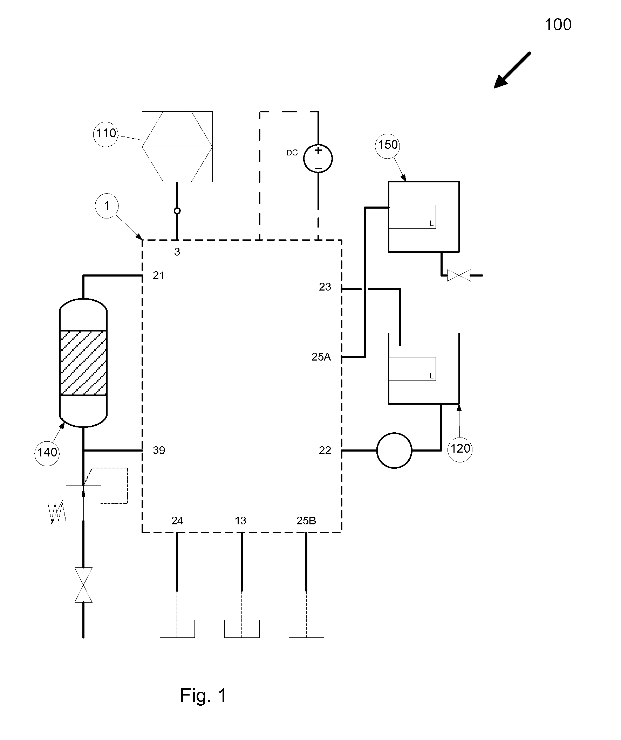

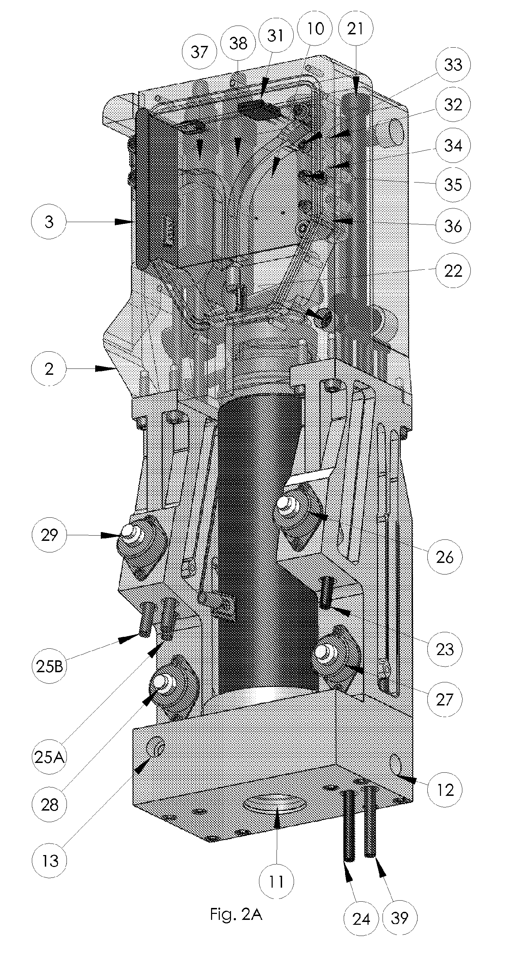

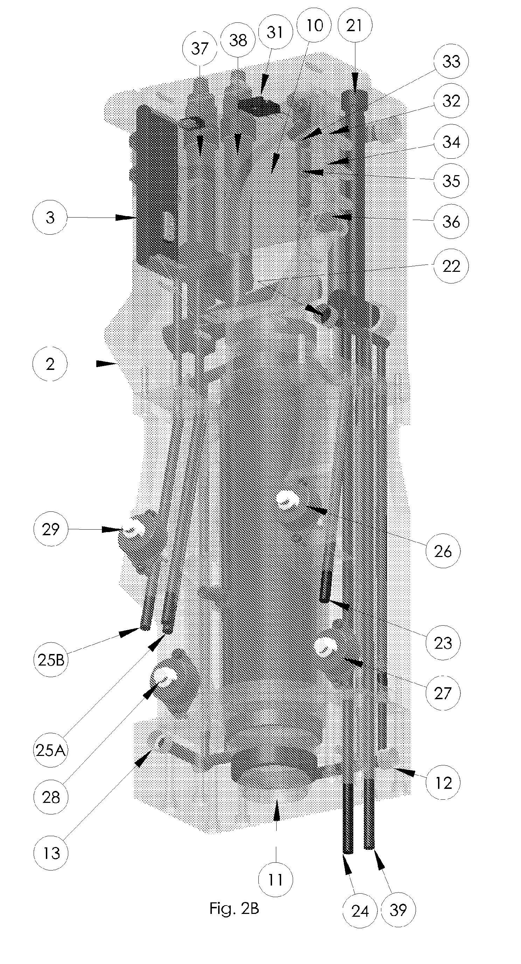

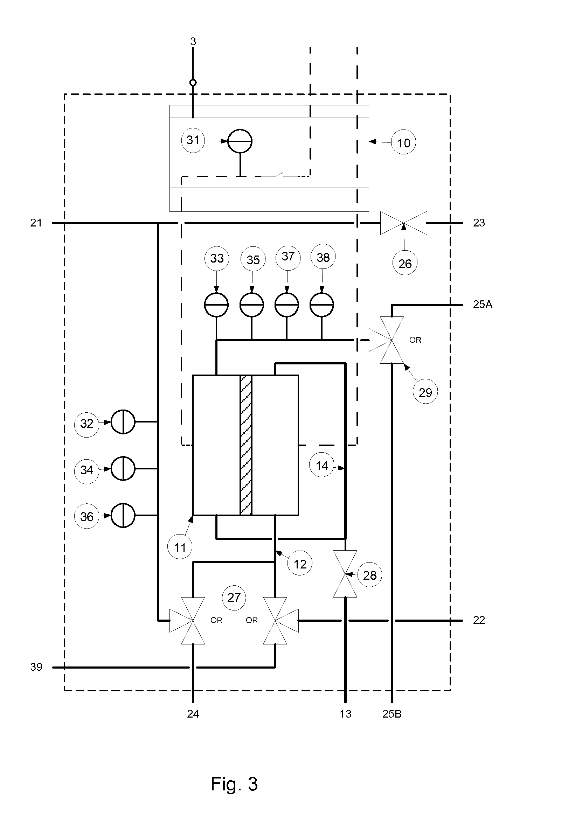

Figure 1 shows a diagram of a device 100 for producing an electrochemically activated solution, such as an anolyte or a catholyte solution, such as Electrolyzed Oxidized Water (EOW). Device 100 comprises a first control unit or processor 110, one or more salt reservoirs 120, one or more (softener-)water treatment reservoirs 140 and a reservoir 150 for the produced solution and an electrochemical reactor 1 according to the invention. Figures 2A and 2B show a first preferred embodiment of an electrochemical reactor 1 according to the invention in more detail. Figure 3 shows a part of the diagram of figure 1 in more detail.

In the first preferred embodiment the electrochemical reactor 1 according to the invention comprises a housing 2 in which all components are integrated. Housing 2 is accommodated releasably in device 100 and can be connected to first processor 110 and the one or more reservoirs 120, 140 and 150.

The electrochemical reactor comprises a cell 11 which is adapted to produce the electrochemically activated solution, such as an anolyte or a catholyte solution, by means of an electrolysis process. The electrolysis process used is based on the known ECA technology (Electrical Chemical Activation). The ECA technology is based on an electrolysis process with water and possibly salt, for instance sodium chloride, as raw materials. Cell 11 comprises a membrane. A suitable cell is a Flow Electrolyte Module (FEM) cell. Such a FEM-cell is known in the relevant field and is described for instance in "Electrochemical Activation (ECA) Technology, Water Purification System of the Future", published on www.processtech.co.uk/Eca.doc by Jim Daly M.D. PTA Ltd. In the shown and described preferred embodiment the operation of device 1 is described in the context of producing an anolyte solution, for instance EOW, which can be used as disinfectant.

Housing 2 comprises an inlet 21 for water and an inlet 22 for the salt, which is preferably supplied in the form of a salt solution. The produced disinfectant, in this case EOW, is delivered by means of outlet 25. In the shown preferred embodiment outlet 25 consists of two outlets, i.e. 25A for approved disinfectant and 25B for rejected disinfectant.

Housing 2 is provided with a valve 26 for replenishing the salt reservoir 120, a valve 27 for switching between production of disinfectant and regeneration of softener 140, a valve 28 for pH regulation and a valve 29 for outlets 25A and 25B to reservoir 150.

Sensor 31 is a current sensor. Sensors 32 and 33 are temperature sensors for respectively the water and the EOW.

Housing 2 is further provided with a number of measuring means intended for measuring various parameters of the electrolysis process. Sensors 34 and 35 are adapted to measure the EC (electrical conductivity) of respectively the water and the EOW. Sensor 36 is a pressure sensor. Sensor 37 is a pH sensor and sensor 38 is adapted to measure the ORP (Oxidation Reduction Potential).

Valve 26 controls the inflow of water to salt reservoir 120 in which the salt solution (brine) is situated. Valve 26 is preferably controlled by means of a float which floats in the salt solution. When the water level is too low, valve 26 will automatically be opened in order to admit more water into salt reservoir 120. At a signal from current sensor 31 the supply of the quantity of salt solution is controlled by the second control unit 10 integrated into the electrochemical reactor in order to thus obtain a preset electric current. When the set current is not reached, a warning signal is generated after a predetermined period of time and communicated via the interface or GSM module.

Valve 27 is used to switch between the production and regeneration processes. The regeneration process is started after a determined production quantity since the previous regeneration process. This production quantity is preset, but is adjusted by control unit 110 on the basis of the measurement values of EC sensors 34 and 35. In this way damage to the chemical reactor due to scaling is prevented and the efficiency of the machine is increased by not regenerating more often than necessary.

In the regeneration position of valve 27 connection 21 is connected through to 24 and 22 is connected through to 39. By supplying salt solution to 22 the softener reservoir 140 filled with ion-exchange resin is flushed with salt solution, which is carried away through connection 24.

In the production position of valve 27 water flows out of the softener reservoir via connection 21 to mixing hose 12 and the supplied salt solution also flows from connection 22 to mixing hose 12. The mixed solution then flows into the cathode chamber of cell 11.

Valve 28 is controlled by the integrated control unit on the basis of the pH value measured by sensor 37. Solution (semi-manufacture) from the cathode chamber of cell 11 is then carried through the anode chamber of cell 11 via conduit 14. The pH value of the disinfectant will fall due to a part of the solution being discharged from the cathode chamber by means of conduit 13. The quantity of solution discharged can be controlled by means of valve 28 at a signal from sensor 37.

Valve 29 controls the approval or rejection of the produced disinfectant, in this example EOW. This valve is controlled by the integrated control unit on the basis of the pH value measured by sensor 37 and the ORP value measured by sensor 38, the measured water pressure, the current strength, the EC of the disinfectant and the rise in temperature. If measured values are found to be correct, the EOW is ready for use and will flow out of outlet 25A. Outlet 25A serves to connect housing 2 to reservoir 150.

If the measured values do not conform to the target values the produced EOW will then flow out of opening 25B as waste. The target pH value is preferably pH-neutral. The ORP value must be higher than a predetermined target value. In the described application a suitable target value is 900 mV. The target value is preferably higher than or equal to 800 mV. Housing 2 is provided with an interface 3. This interface 3 serves for connection to the first control unit 110.

Outlet 23 serves for connection of housing 2 to reservoir 120 with salt solution and serves to replenish the reservoir with water in order to maintain the reservoir level. Inlet 21 serves for connection of housing 2 to the outlet of softener reservoir 140.

Outlet 39 serves for connection to the inlet of softener reservoir 140.

Pressure sensor 36 serves to determine whether the water pressure required for proper operation of device 100 is present.

Sensor 34 serves to monitor the EC value of the incoming water. A high value for the electrical conductivity signifies a high degree of contamination.

The first control unit 110 generally indicates when cell 11 must produce and indicates the preconditions for production in the form of target values for parameters of the electrolysis process, such as pH, ORP, Ampere, current strength, and determines whether the EOW is correct. The first control unit 110 optionally controls the communication with the user via an interface or via a GSM connection.

The second control unit 10 generally controls the functioning of electrochemical reactor 11, provides for measurement control in reactor 11 in coaction with the sensors, controls current strength, controls pH, operates valves and communicates this with first control unit 110.

The invention is of course not limited to the described and shown preferred embodiment. The invention relates generally to any embodiment falling within the scope of protection as defined in the claims and as seen in the light of the foregoing description and accompanying drawings.

## Claims

1. Device for producing an electrochemically activated solution, such as an anolyte or a catholyte solution, by means of an electrolysis process, for instance EOW, on the basis of one or more raw materials, for instance water and salt, comprising an electrochemical reactor (1) for performing the electrolysis process, measuring means (37) for measuring various parameter values of the electrolysis process and/or the solution, wherein the device further comprises a first and second control unit (110 and 10) which are connectable to the measuring means, (37) wherein the device further comprises a separate housing (2) in which the electrochemical reactor, (1) the second control unit (10) and the measuring means (37) are received, which separate housing (2) is adapted for connection to the first control unit (110) and to reservoirs present in the device for the raw materials and/or the solution, wherein the measuring means (37) are adapted to measure the pH value of the produced solution before dispensing, **characterised in that** for the purpose of adjusting the electrolysis process on the basis of the parameter values until the parameter values meet predetermined target values, after which the solution is approved, the second control unit (10) compares the measured pH value to a predetermined target value and, in the case of a sufficient degree of similarity, dispenses the solution at an outlet (25A) for approved disinfectant or, in the case a pH value is too low or too high, discharges the solution as waste at another outlet (25B) for rejected disinfectant.

2. Device as claimed in claim 1, wherein an adjustable quantity of a catholyte solution from the electrochemical reactor is fed back into the electrochemical reactor, and the magnitude of the quantity depends on the measured pH value.

3. Device as claimed in claim 1 or 2, wherein the measuring means (37) are adapted to measure the ORP value of the produced solution before dispensing, and wherein the second control unit (10) compares the measured ORP value to a predetermined target value and, in the case of an equal or higher value, dispenses the solution or, in the case of an ORP value which is too low, discharges the solution as waste.

4. Device as claimed in claim 1, 2 or 3, wherein the measuring means (37) are adapted to measure a first temperature value of at least one of the raw materials, for instance water, and a second temperature value of the solution, for instance EOW, wherein the second control unit (10) determines the temperature difference and, in the case of an unacceptable temperature increase, stops production.

5. Device as claimed in any of the foregoing claims, wherein the measuring means (37) are adapted to measure the EC value for the electrical conductivity of the solution and of the inflow water, wherein the second control unit (10) compares the measured EC values to predetermined target values and thus adjusts the production quantity between regeneration operations of the connected ion exchanger softener.

6. Device as claimed in any of the foregoing claims, wherein the housing (2) is arranged releasably in the device.

7. Device as claimed in any of the foregoing claims, wherein the electrochemical reactor (1) is a Flow Electrolyte Module (FEM) cell.

8. Device as claimed in any of the foregoing claims, wherein the electrolysis process is based on Electrical Chemical Activation (ECA) technology.

## Patentansprüche

1. Vorrichtung zum Herstellen einer elektrochemisch aktivierten Lösung, wie einer anolytischen oder einer katholytischen Lösung mittels eines Elektrolyseverfahrens, beispielsweise EOW, auf Grundlage von Rohstoffen, beispielsweise Wasser und Salz, umfassend einen elektrochemischen Reaktor (1) für die Durchführung des elektrochemischen Verfahrens, Messmitteln (37), um bestimmte Werte von Parametern des elektrochemischen Verfahrens und/oder der Lösung zu messen, wobei die Vorrichtung weiterhin eine erste und eine zweite Kontrolleinheit (110 und10) umfasst, die mit den Messmitteln (37) verbindbar sind, wobei die Vorrichtung weiterhin ein getrenntes Gehäuse (2) umfasst, in dem der elektrochemische Reaktor (1), die Kontrolleinheit (10) und die Messmittel (37) angeordnet sind, wobei das getrennte Gehäuse (2) ausgebildet ist, um mit der ersten Kontrolleinheit (110) und mit in der Vorrichtung vorhandenen Behältern für die Rohstoffe und/oder die Lösung verbunden zu werden, wobei die Messmittel (37) ausbildet sind, um den pH-Wert der erzeugten Lösung vor deren Abgabe zu messen, **dadurch gekennzeichnet, dass**, um das Elektrolyseverfahren auf Grundlage der Werte der Parameter so anzupassen, dass die Werte der Parameter vorgegebenen Sollwerten entsprechen, wonach die Lösung freigegeben wird, die zweite Kontrolleinheit (10) den gemessenen pH-Wert mit einem vorgegebenen Sollwert vergleicht und bei ausreichender Übereinstimmung die Lösung an einen Auslass (25a) für freigegebene Desinfektionslösung abgibt und im Fall eines zu niedrigen oder zu hohen pH-Wertes die Lösung als Abfall über einen anderen Auslass (25b) für verworfene Desinfektionslösung abgibt.

2. Vorrichtung gemäß Anspruch 1, wobei eine regelbare Menge einer katholytischen Lösung aus dem elektrochemischen Reaktor in den elektrochemischen Reaktor zurückgeführt wird, wobei die Menge von dem gemessenen pH-Wert abhängig ist.

3. Vorrichtung gemäß Anspruch 1 oder Anspruch 2, **dadurch gekennzeichnet, dass** die Messmittel (37) ausgebildet sind, um den ORP-Wert der hergestellten Lösung vor deren Abgabe zu bestimmen und die zweite Kontrolleinheit (10) den gemessenen ORP-Wert mit einem vorgegebenen Sollwert vergleicht und im Falle eines gleichen oder höheren Wertes die Lösung abgibt oder im Falle eines zu niedrigen ORP-Wertes die Lösung als Abfall abgibt.

4. Vorrichtung gemäß einem der Ansprüche 1, 2 oder 3, wobei die Messmittel (37) ausgebildet sind, um einen ersten Temperaturwert mindestens eines der Rohstoffe, beispielsweise von Wasser, und einen zweiten Temperaturwert der Lösung, beispielsweise EOW, zu messen, wobei die zweite Kontrolleinheit (10) die Temperaturdifferenz ermittelt und im Falle einer nicht akzeptablen Temperatur den Herstellprozess abbricht.

5. Vorrichtung gemäß einem der vorhergehenden Ansprüche, wobei die Messmittel (37) ausgebildet sind, um den Wert der elektrischen Leitfähigkeit der Lösung und des eintretenden Wassers zu messen, wobei die zweite Kontrolleinheit (10) die gemessenen Werte der elektrischen Leitfähigkeit mit vorgegebenen Sollwerten vergleicht und so die Produktionsmenge zwischen den Regenerationsschritten des verbundenen Ionenaustauschers anpasst.

6. Vorrichtung gemäß einem der vorhergehenden Ansprüche, wobei das Gehäuse (2) lösbar in der Vorrichtung angeordnet ist.

7. Vorrichtung gemäß einem der vorhergehenden Ansprüche, wobei der elektrochemische Reaktor (1) eine Flusselektrolytenmodul (FEM)-Zelle ist.

8. Vorrichtung gemäß einem der vorhergehenden Ansprüche, wobei das elektrolytische Verfahren auf einer elektrochemischen Aktivierungstechnologie (ECA) beruht.

## Revendications

1. Dispositif pour produire une solution activée électrochimiquement, telle qu'une solution anolyte ou une solution catholyte, au moyen d'un processus d'électrolyse, par exemple de l'eau électrolysée oxydante (EOW), sur la base d'une ou plusieurs matières premières, par exemple de l'eau et du sel, comprenant un réacteur électrochimique (1) pour réaliser le processus d'électrolyse, des moyens de mesure (37) pour mesurer diverses valeurs de paramètres du processus d'électrolyse et/ou de la solution, le dispositif comprenant en outre une première et une seconde unités de contrôle (110 et 10) qui peuvent être connectées aux moyens de mesure (37), le dispositif comprenant en outre un boîtier (2) séparé dans lequel sont reçus le réacteur électrochimique (1), la seconde unité de contrôle (10) et les moyens de mesure (37), lequel boîtier séparé (2) est apte à être connecté à la première unité de contrôle (110) et à des réservoirs présents dans le dispositif pour les matières premières et/ou la solution, les moyens de mesure (37) étant aptes à mesurer la valeur du pH de la solution produite avant distribution, **caractérisé en ce que,** dans le but d'ajuster le processus d'électrolyse sur la base de valeurs de paramètres jusqu'à ce que les valeurs de paramètres respectent des valeurs de consigne prédéterminées, après quoi la solution est approuvée, la deuxième unité de contrôle (10) compare la valeur de pH mesurée à une valeur de consigne prédéterminée et, dans le cas d'un degré de similarité suffisant, distribue la solution à une sortie (25a) pour désinfectant approuvé, ou, dans le cas d'une valeur de pH trop faible ou trop élevée, décharge la solution comme déchet par une autre sortie (25B) pour désinfectant rejeté.

2. Dispositif selon la revendication 1, dans lequel une quantité ajustable d'une solution catholyte provenant du réacteur électrochimique est ramenée dans le réacteur électrochimique, l'importance de la quantité dépendant de la valeur du pH mesurée.

3. Dispositif selon la revendication 1 ou 2, dans lequel les moyens de mesure (37) sont aptes à mesurer la valeur du potentiel d'oxydoréduction (ORP) de la solution produite avant de la distribuer, et la seconde unité de contrôle (10) compare la valeur du potentiel d'oxydoréduction mesurée à une valeur de consigne prédéterminée et, dans le cas d'une valeur égale ou supérieure, distribue la solution, ou, dans le cas d'une valeur de potentiel d'oxydoréduction trop faible, décharge la solution comme déchet.

4. Dispositif selon l'une des revendications 1, 2 ou 3, dans lequel les moyens de mesure (37) sont adaptés à mesurer une première valeur de température d'au moins l'une des matières premières, par exemple l'eau, et une seconde valeur de température de la solution, par exemple l'eau électrolysée oxydante, la seconde unité de contrôle (10) déterminant la différence de température et, dans le cas d'une augmentation de température inacceptable, arrête la production.

5. Dispositif selon l'une des revendications précédentes, dans lequel les moyens de mesure (37) sont aptes à mesurer la valeur de la conductivité électrique pour la conductivité électrique de la solution et de l'eau entrante, la seconde unité de contrôle (10) comparant les valeurs de conductivité électrique mesurées à des valeurs de consigne prédéterminées et ainsi ajustant la quantité de production entre les opérations de régénération de l'adoucisseur échangeur d'ions connecté.

6. Dispositif selon l'une des revendications précédentes, dans lequel le boîtier (2) est arrangé de façon amovible dans le dispositif.

7. Dispositif selon l'une des revendications précédentes, dans lequel le réacteur électrochimique (1) est une cellule de module à flux d'électrolyte (FEM).

8. Dispositif selon l'une des revendications précédentes, dans lequel le processus d'électrolyse est basé sur la technologie de l'activation électrochimique (ECA).
